# EUROPEAN PATENT APPLICATION

(11) **EP 4 590 005 A1**
(43) Date of publication of application: **23.07.2025**
(21) Application number: 25151438.6
(22) Date of filing: 13.01.2025
(51) Int. Cl.: H04W 8/12, H04L 65/1016, H04L 65/1069, H04W 4/16

(54) **MANAGEMENT OF CALL ROUTING**

(30) Priority: 16.01.2024 FI 20245034
(71) Applicant: Telia Company AB, 169 94 Solna (SE)
(72) Inventor: JALKANEN, Tero, 04300 TUUSULA (FI); SARAJISTO, Tomi, 00790 HELSINKI (FI)
(74) Representative: Berggren Oy

(57) **Abstract**

A method for managing a call originating from a roaming terminal device is provided, the method comprises: obtaining (310) a destination address; generating (320) an inquiry to data storage; receiving (330) a response to the inquiry; and generating (340) a control signal to a core network of a visited communication network (VPLMN) the terminal device is roaming, the control signal carrying data causing an instruction to the core network of the visited communication network (VPLMN) to route the call by the visited communication network (VPLMN) serving the roaming terminal device (150) to the destination address. Also a call management function, a communication system and a computer program are disclosed.

## Description

### TECHNICAL FIELD

The invention concerns in general the technical field of telecommunications. More particularly, the invention concerns call management.

### BACKGROUND

In telecommunication networks there are defined various destination addresses, such as short numbers, which shall be handled differently in a call situation especially in a roaming situation. As examples of such special numbers the following categories may be mentioned:
- Regular emergency numbers such as 112 and 911 that per regulation require specific call handling - need to be routed to the visited network
- Additional emergency numbers such as 110 and 114 that per regulation require specific call handling - need to be routed to the visited network
- Pseudo-emergency numbers such as 116000 (missing child hotline) - should be routed to the visited network
- Pseudo-emergency numbers such as 116117 (non-emergency medical on-call service) - should be routed to the home network
- Tollfree short numbers like 110 that are used for e.g., connecting to the mobile operator customer care - should be routed to the home network
- Toll-free short numbers like 323232 that used for e.g., connecting to a pizza restaurant - should be routed to the visited country

However, in IP Multimedia System (IMS) based roaming (i.e., VoLTE and VoNR) the call is always routed to the home network due to the Home Routing (HR) model being used. The only exception is the emergency call which always uses specific emergency call procedures via Local BreakOut (LBO) in the visited network. This means there is no standardized way for Visited Public Land Mobile Network (VPLMN) to "intercept" regular IMS based calls going to certain special numbers and route them via LBO mechanism, unlike in 2/3G Circuit Switched (CS) voice roaming which uses LBO as the basic model.

The problem also includes how to handle overlapping numbers, for example 110 is used for both as an emergency number in some countries but as a customer care number by telecom operators in some other countries.

Furthermore, as it comes to the emergency numbers the terminal device, i.e., the mobile device, automatically knows that 112 and 911 need emergency call handling. In case the visited country is using additional emergency numbers like 110 then the MME/AMF of the respective mobile communication network need to inform the terminal device about those during the attach procedure via Emergency Number List function.

For other numbers, a specific call routing handling per each number (or number range) is required, either by home operator IMS or by the international carrier between the home and visited operators. Arranging this requires a lot of manual work and may turn out to be difficult to achieve that there is need to execute commercial negotiations between the operators.

Hence, there is room for introducing novel approaches in the described environment for managing calls with special destination addresses.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a call management function, a communication system and a computer program for managing a call originating from a roaming terminal device.

The objects of the invention are reached by a method, a call management function, a communication system and a computer program for managing a call originating from a roaming terminal device as defined by the respective independent claims.

According to a first aspect, a method for managing a call originating from a roaming terminal device is provided, the call is implemented with IP Multimedia Subsystem based communication protocol, the method, performed by a call management function, comprises:
obtaining a destination address of the call,
generating an inquiry to data storage arranged to store a number of destination addresses that are to be handled in accordance with a special procedure, the inquiry carrying data descriptive of the destination address of the call,
receiving a response to the inquiry,
generating, in response to that data in the response indicates that the destination address of the call belongs to the number of destination addresses that are to be handled in accordance with the special procedure, a control signal to a core network of a visited communication network the terminal device is roaming, the control signal carrying data causing an instruction to the core network of the visited communication network to route the call by the visited communication network serving the roaming terminal device to the destination address.

The destination address may e.g. be a phone number of a recipient of the call.

Moreover, the method may further comprise:
determining, from the data in the response, the special procedure to be applied with respect to the call.

The special procedure may be a routing of the call to the destination address with a Local BreakOut in the visited network the terminal device is roaming.

According to a second aspect, a call management function for managing a call originating from a roaming terminal device is provided, the call is implemented with IP Multimedia Subsystem based communication protocol, the call management function is configured to:
obtain a destination address of the call,
generate an inquiry to data storage arranged to store a number of destination addresses that are to be handled in accordance with a special procedure, the inquiry carrying data descriptive of the destination address of the call,
receive a response to the inquiry,
generate, in response to that data in the response indicates that the destination address of the call belongs to the number of destination addresses that are to be handled in accordance with the special procedure, a control signal to a core network of a visited communication network the terminal device is roaming, the control signal carrying data causing an instruction to the core network of the visited communication network to route the call by the visited communication network serving the roaming terminal device to the destination address.

The call management function may be configured to apply a phone number of a recipient of the call as the destination address.

Moreover, the call management function may further be configured to:
determine, from the data in the response, the special procedure to be applied with respect to the call.

The call management function may be configured to apply, as the special procedure, a Local BreakOut in the visited network the terminal device is roaming in routing the call to the destination address.

According to a third aspect, a communication system is provided, the communication system comprises:
a terminal device,
a home communication network of a subscription of the terminal device,
a visited communication network serving the terminal device as a roaming subscriber,
a call management function for managing a call originating from the terminal device, the call is implemented with IP Multimedia Subsystem based communication protocol, the call management function is configured to:
   obtain a destination address of the call,
   generate an inquiry to data storage arranged to store a number of destination addresses that are to be handled in accordance with a special procedure, the inquiry carrying data descriptive of the destination address of the call,
   receive a response to the inquiry,
   generate, in response to that data in the response indicates that the destination address of the call belongs to the number of destination addresses that are to be handled in accordance with the special procedure, a control signal to a core network of a visited communication
   network the terminal device is roaming, the control signal carrying data causing an instruction to the core network of the visited communication network to route the call by the visited communication network serving the roaming terminal device to the destination address.

Further, the communication system may further comprise:
IP exchange, IPX, at least for implementing signaling between the home communication network and the visited communication network.

The call management function may be implemented in at least one of the following: a core network of the home communication network, a core network of the visited communication network, the IP exchange.

According to fourth aspect, a computer program is provided, the computer program comprising instructions to cause an apparatus configured to implement the call management function according to the second aspect as defined above to execute the steps of the method according to the first aspect as defined above.

The expression "a number of" refers herein to any positive integer starting from one, e.g., to one, two, or three.

The expression "a plurality of' refers herein to any positive integer starting from two, e.g., to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication according to an example.
Figure 2 illustrates schematically a data structure according to an example.
Figure 3 illustrates schematically a method according to an example.
Figure 4 illustrates schematically a flow chart according to an example.
Figure 5 illustrates schematically a flow chart according to another example.
Figure 6 illustrates schematically an apparatus according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

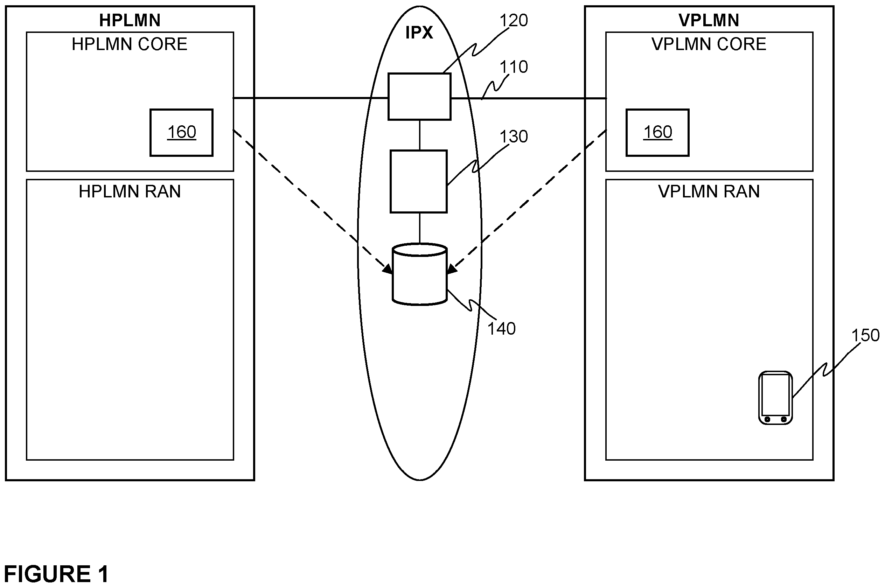

Figure 1 illustrates schematically an example of a communication system in which the present invention is implemented to. The communication system comprises a home communication network HPLMN which may refer to a home mobile communication network. The HPLMN comprises a core network, HPLMN CORE, and a radio access network, HPLMN RAN. The HPLMN CORE comprises core network entities specific to a network technology used in the implementation of the HPLMN. For example, the core network comprises a number of management entities at least configured to control an operation of the respective network as well as a number of registers arranged to store subscriber related data among other data. Correspondingly, the communication system comprises at least visited communication network VPLMN that may provide communication services as described in the forthcoming description to a subscriber, called as a terminal device from now on, of the home communication network HPLMN. The VPLMN also comprises a core network, VPLMN CORE, and a radio access network, VPLMN RAN. The core network and the radio access network of the visited communication network may comprise the corresponding entities as in the home communication network HPLMN. For example, the HPLMN and the VPLMN may be mobile communication networks implemented with the 5^{th} generation mobile network technology. For sake of completeness it is worthwhile to mention that the subscriber of the home communication network HPLMN is implemented as a subscription enabling access at least to the home communication network in which the subscriber data is maintained and managed in a known manner for the respective subscriber. The subscription itself may e.g., be implemented as a subscriber identity module (SIM) arranged in the terminal device 150 as a smart card implementation or as a software implementation.

In the embodiment as schematically illustrated in Figure 1 the HPLMN and the VPLMN are interconnected with so-called IP exchange, IPX (also known as IP exchange (IPX) network). The IPX shall be considered as a telecommunications interconnection model for exchanging IP based traffic via IP based Network-to-Network Interface. The IP based data traffic between the HPLMN and the VPLMN via the IPX is referred with 110 in Figure 1 for illustrative purposes and it is conveyed through one or more IPX entities 120 that are configured to implement the communication interfaces towards the respective networks (HPLMN, VPLMN). For example, the IPX entity 120 may be an IPX proxy configured to implement the respective interfaces and, thus, to enable the IP based communication channel as a hub type solution for a plurality of communication networks (HPLMN, VPLMN).

In accordance with an embodiment of the invention a call management function 130 may be arranged in the IPX. The call management function 130 may receive its input from the IPX entity 120 which means that the call management function 130 may access the call related data wherein the call is implemented over IMS with IP based data. The access to the call related data may refer to that the call management function 130 is arranged to receive at least part of the call related data in a manner as is described in the forthcoming description.

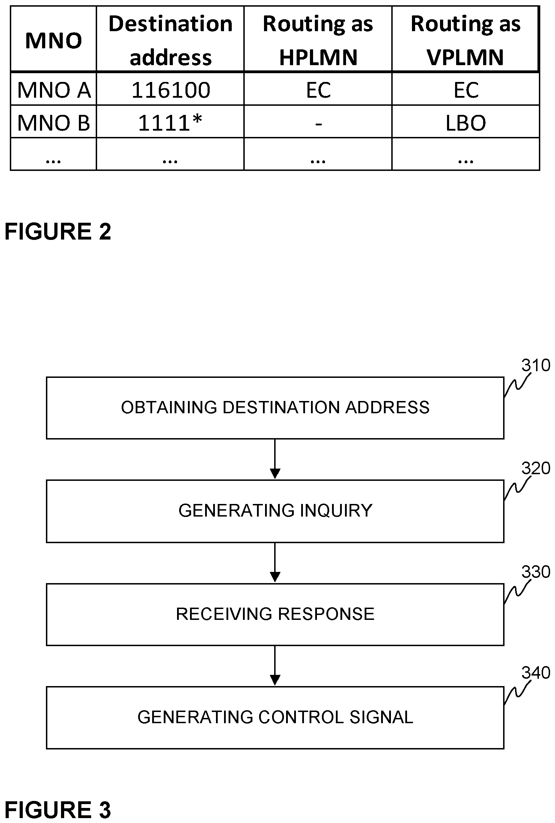

Furthermore, the IPX comprises a data storage 140 implemented e.g., as a database that is arranged to store destination addresses, such as special destination addresses that are to be handled in accordance with a special procedure as is described herein. For example, the data storage 140 may be provided with a communication interface over which a number of communication network operators, cf. e.g., telecom operators of the HPLMN and the VPLMN, may input data to be stored in the data storage 140 (cf. the arrows with dashed lines in Figure 1). The data input to the data storage by the number of communication network operators may define at least some special number(s) of each operator and how connection request to the respective special number(s) shall be managed. For example, the data may be input to the data storage 140 from a specific entity of the communication network, such as from a network management entity, such as Mobility Management Entity MME. A non-limiting example of a data structure stored in the data storage 140 is shown in Figure 2. The data structure may store for each operator (such as those referred with MNO A and MNO B in Figure 2) one or more entries defined e.g., by the respective operator wherein the entries define special destination addresses, cf. destination numbers, and rule(s) of managing connection attempts, i.e., IP based calls over IMS. For example, the rules may define ways to manage the call connection when the terminal device 150 having a subscription of the respective operator (MNO A, MNO B) is roaming in a visited communication network, VPLMN and the rules may define the routing for the subscribers of the subscribers of the respective operator (column Routing as HPLMN in the table of Figure 2) as well as routing for the subscribers of the subscribers of the respective operator defined by the visited operator in question (column Routing as VPLMN in the table of Figure 2). The rules, or definitions, may be set by the respective operator (MNO A, MNO B) in accordance with their own rules and information received from the other operators. If an attention in Figure 2 is given to a definition set for the telecom operator denoted with MNO A, it may be learnt that the home operator (cf. MNO A) has defined that IP based calls wherein the destination address is 116100 shall be handled in the visited network VPLMN as emergency calls. Correspondingly, the visited operator requires with the definitions that the IP based calls from subscribers of the operator MNO A roaming shall also be managed as emergency calls in the VPLMN. When it comes to the special destination address 1111 * (i.e. the number space starting with 1111) of the second network operator MNO B, there is not defined any special management of the call by the home operator, but the visited operator of the network VPLMN has set the rule to cause so-called Local BreakOut of the call in the VPLMN to reach the destination with all calls starting with the defined numbering scheme 1111. In other words, the call is not directed to the HPLMN to route the call to the destination from the HPLMN. The data stored in the data structure may comprise further entries defining the management of calls with respect to further network operators. In some embodiments it is arranged to store definitions only for calls occurring from a terminal device 150 roaming in the VPLMN. As already mentioned, the data structure in the data storage 140 is advantageously arranged so that there may be performed inquiries in order to retrieve data, or information, from the data structure. Therefore, an applicable way to arrange the storing of the data in the data storage may be an implementation of the data storage as a database that efficiently enables inquiring of data therefrom.

The communication networks, HPLMN and VPLMN, may be equipped with a call management function 160 that is involved in a call management in the respective networks in a manner that is described in the forthcoming description. The call management function 160 in the respective networks may be implemented in the core network of the respective network and be an entity that may receive its input from a network entity in the respective network that is involved in IP based call connection management. Such an entity may e.g., be a Mobility Management Entity (MME) and the Access and Mobility Management Function (AMF) therein. Even if the call management function 160 is illustrated as a separate entity in the respective network its functionality may be integrated to the core network entity being involved in the IP based call connection management, such as in the MME/AMF. In other words, the call management function 160 may, in any of the embodiments described herein, be implemented as an apparatus in the respective network location or its functionality may be integrated in an existing entity in the respective network location.

Next at least some aspects of the present invention are described by referring to Figure 3 schematically illustrating a method according to an embodiment. The method is illustrated from the call management function 160 point of view that serves the communication network VPLMN in which the terminal device 150 is roaming as a visiting entity. The same functionality may also be implemented in the respective entity of the home communication network HPLMN of the terminal device 150.

Hence, the method implemented by the call management function 160 residing in the core network of the visited communication network VPLMN serving the terminal device 150 is performed to a call originating from the terminal device 150 wherein the call is implemented with IP Multimedia Subsystem based communication protocol. First, the call management function 160 is configured to obtain 310 a destination address of the call. The destination address may refer to a destination address expressed as a phone number. The obtainment 310 of the destination address may refer to an approach wherein the entity of the core network of the communication network, such as the MME/AMF, is arranged to deliver data comprising the destination address of the call to the call management function 160 in response to a receipt of the call request from the terminal device 150 over a number of network nodes and entities.

In response to that the call management function 160 possesses the destination address it is configured to generate an inquiry 320 to the data storage 140 arranged to store at least a number of destination addresses that are to be handled in accordance with a special procedure. In other words, the call management function 160 is arranged to inquire from the data storage 140 if some telecom operator, such as the operator of the home network HPLMN or the operator of the visited network VPLMN has stored any instructions with respect to handling of the call to the destination address in question. Hence, the generated inquiry 320 is arranged to carry data descriptive of the destination address of the call so as to enable a generation of a response descriptive of instructions, if any, to handle the call. Thus, the data storage 140 is configured to generate the response that is received 330 by the call management function 160 of the visited network VPLMN. In accordance with a preferred embodiment the inquiry and the response may e.g., be performed on a signal plane so as to minimize a consumption of the network resources on the user plane. The generation of the response from the data storage 140 may be arranged to occur every time an inquiry is generated to the data storage 140. In accordance with some embodiments of the invention the response may be generated only if the data storage 140 contains data for the destination address delivered to it in the inquiry. This kind of approach may be arranged so that the call management function 160 is provided with a functionality that the response is waited over a predefined duration of time and if no response is received 330 during the predefined time window, the call is handled in accordance with normal routines e.g. by delivering it to the home network HPLMN for further routing. In order to monitor the duration of time the call management function 160 a timer may be arranged in the call management function 160 and the timer is initiated in response to the generation 320 of the inquiry. Hence, if no response is received until the lapse of the time, the call management is continued without any special procedure.

On the other hand, in response to a detection that data in the response received from the data storage 140 indicates that the destination address of the call belongs to the number of destination addresses that are to be handled in accordance with the special procedure a control signal is generated 340 in a core network, VPLMN CORE, of a visited network VPLMN the terminal device 150 is roaming. The control signal at least carries data causing an instruction to the core network, VPLMN CORE, to route the call inside the visited network VPLMN serving the roaming terminal device 150. In other words, the call management function 160 receiving the response may generate 340 the control signal to the MME/AMF entity in the core network, VPLMN CORE, so as to cause that the call is handled in accordance with the special procedure. The special procedure may be defined in the control signal and the data defining the special procedure may also be received from the data storage 140 in the response or through a separate inquiry. In any case, the definition of the special procedure defines how the call in question is to be handled, or managed. The definition may e.g., provide one or more instructions to route the call in a manner that deviates from the normal procedure in which the IP based call is routed to the home network, HPLMN. This may refer to an initiation of a Local BreakOut procedure in the visited network, VPLMN, for routing the call in question. Thus, the responsible entity for managing the call in the VPLMN initiates a procedure in accordance with information received from the data storage 140 and routes the call accordingly.

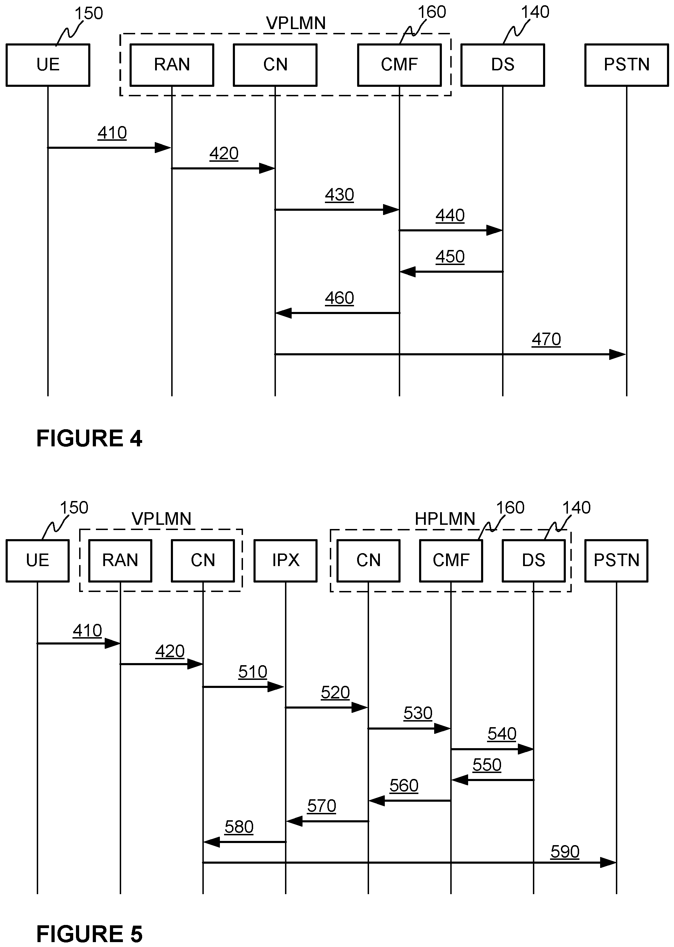

Figure 4 schematically illustrates the operation in accordance with an example embodiment as a flow chart. The terminal device 150 is served as a roaming subscriber by a visited communication network, VPLMN. The user of the terminal device 150 initiates an IP based call that is carried over a VPLMN RAN to a core network of VPLMN (arrows 410 and 420 in Figure 4). The core network CN is arranged to obtain at least a destination address from the call and provide it, e.g., with a dedicated signal, to an entity called as a call management function 160 that in the embodiment in question resides in the core network of the VPLMN. The VPLMN is marked with the box drawn with a dashed line in Figure 4. The signal by means of which at least the destination address is provided from the core network component(s), such as from the MME/AMF, to the call management function 160 is referred with 430 in Figure 4. For sake of completeness it is worthwhile to mention that the call management function 160 is drawn as a separate entity to the core network of the VPLMN in Figure 4 even if it may reside inside the core network CN of the VPLMN. In response to a receipt of at least the destination address of the call, the call management function 160 is configured to inquire 320 information from a data storage 140 if the home operator of the subscription of the terminal device 150 has defined that the destination address of the call in question is to be handled in accordance with a special procedure. The inquiry signal is denoted with the reference 440 in Figure 4. The data storage 140 may provide the response to the call management function 160 as indicated with the arrow referred with 450 in Figure 4 and the information carried in the response is then forwarded, as received or as modified, to the responsible entity of the call routing in the core network CN of the VPLMN, such as MME/AMF (cf. arrow 460 in Figure 4). In the described embodiment the destination address is defined in the data storage 140 so that a special procedure shall be applied with respect to it and, therefore, the visited communication network, VPLMN, routes the call directly to the destination that is indicated with the entity PSTN and with arrow 470 in Figure 4. The PSTN may be understood as a communication network in which the entity of the destination, such as an emergency call centre or any similar, is residing.

In some situations it is not possible to utilize a call management function 160 implemented in a visited network as described. The same may apply to respective data storage 140. Such a situation may occur when there is used so-called security tunnel, such as IPSec Tunnel, for encrypting the data transmission between the communicating entities, e.g., the terminal device 150 and the home network. Then, the entities are not allowed to determine the destination address since they are not capable of decrypting the data in the transmission path. Alternatively or in addition, corresponding situation may occur due to national regulation of the country the terminal device is roaming wherein the national regulation may prevent external monitoring of the signaling data e.g., for determining the destination address of the call. The same problems may be present in the implementation of the invention into the IPX. For such situations as well as in general, one embodiment of the present invention is that the call management function 160 as well as the data storage 140 are arranged in the home network of the subscriber. An example of a flow chart in such an implementation is schematically illustrated in Figure 5. Again, the IP based call is initiated by the user of the terminal device 150 and the call is carried over a VPLMN RAN to a core network of VPLMN (arrows 410 and 420 in Figure 5). Since the visited network is not capable of determine the way to manage the call in the previously described manner it conveys the call to the home network of the subscriber in accordance with the default operation of the communication networks. The call is signaled to the home network through the IPX (cf. arrows 510 and 520 in Figure 5). The call is received by a core network of the HPLMN, such as MME/AMF entity therein, and the respective entity determines on the basis of the information in the signaling that it shall be delivered to a call management function 160 implemented in the HPLMN (signal 530 in Figure 5). The respective call management function 160 is configured to perform as already 15 described, i.e., by generating the inquiry to the data storage 140 in a corresponding manner as already described (cf. signal 540 in Figure 5) and the call management function 160 receives a response to the inquiry (cf. signal 550 in Figure 5). The call management function 160 may configured to deliver the information received from the data storage 140 to the core network (arrow 560 in Figure 5) that conveys the same to the core network of the visited network VPLMN over the IPX (arrows 570 and 580 in Figure 5). Finally, the core network of the visited network VPLMN routes the call in accordance with the received information to the destination address (arrow 590 in Figure 5) that is indicated with the entity PSTN in Figure 5. As already mentioned, the implementation of the routing through the signaling to the home network HPLMN into which the call management function according to the invention is implemented to may be necessary for some situations.

The aspects of the invention in the foregoing description are mainly described with embodiments in which the call management function 160 resides in the visited communication network, VPLMN, serving the terminal device 150 in question or in the home communication network, HPLMN, of the terminal device 150, or actually the subscription of the terminal device 150. In some other embodiments, the call management function 160 may be implemented in the IP exchange network, IPX. In such an embodiment the call management entity in the core network of the VPLMN, such as MME/AMF, is configured to deliver the information at least on the destination address to the call management function 160 implemented in the IPX and the call management function 160 therein interacts with the data storage 140 as described. The call management function 160 is also configured to generate the response to the call management entity in the core network CN of the VPLMN so as to achieve the core network to route the call in accordance with the information received from the data storage 140. The call management function 160 may further be implemented in any other network to perform the operation as described as long as the communication between the involved entities is arranged e.g., over a control plane.

For sake of completeness, it is worthwhile to mention that that the data storage 140 may reside in any accessible network location in any of the described embodiments in which the call management function 160 is implemented either in the visited network or home network or IPX. The data structure in the data storage 140 may correspond to ones already described, but in general the data storage stores at least data defining aspects in relation to various destination addresses to be handled in accordance with a special procedure. The data stored in the data storage may store the aspects defined by the home operator as well as defined by one or more visited operators.

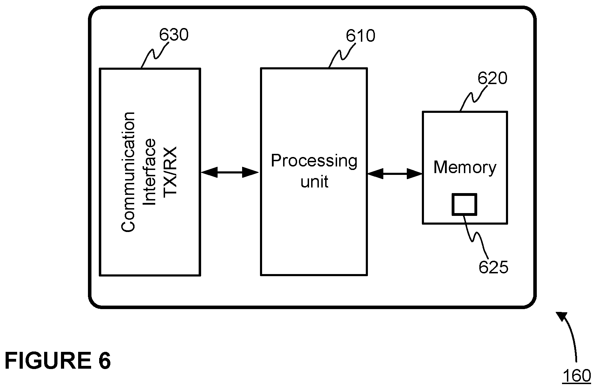

The call management function 160 as described in the description herein may be implemented with one or more apparatuses suitable for practicing the embodiments as described. A non-limiting example of suitable apparatus is schematically illustrated in Figure 6. In other words, the apparatus may be configured to implement at least part of the method as described. The execution of the respective method, or at least some portions of them, may be achieved by arranging a processing unit 610 comprising at least one processor to execute at least some portion of computer program code 625 stored in at least one memory 620 causing the processor 610, and, thus, the apparatus to implement the method steps as described in order to execute the function as described. In other words, the processing unit 610 may be arranged to access the memory 620 and to retrieve and to store any information therefrom and thereto. Moreover, the processing unit 610 may be configured to control a communication through one or more communication interfaces 630 for accessing the other entities being involved in the operation, such as the data storage 140 and the nodes/devices of the communication network, such as the core network of the VPLMN, in a manner as described in the description herein. Hence, the communication interface 630 may be arranged to implement, possibly under control of the processing unit 610, a number of communication protocols, such as an IP or any other communication protocol, for communicating with one or more entities to receive input and to output data as described. The term communication interface 630 shall be understood in a broad manner comprising necessary hardware and software elements for implementing the communication techniques. Further, the apparatus in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone, camera and so on. In some implementation of the apparatus at least some of the input/output devices may be external to the apparatus and coupled to it either wirelessly or in a wired manner. For sake of clarity, the processing unit 610 herein refers to any unit or a plurality of units suitable for processing information and control the operation of the apparatus in general at least in part, among other tasks. The mentioned operations may e.g., be implemented with a microcontroller solution with embedded software. Similarly, the invention is not limited to a certain type of memory 620, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

In the foregoing description it is provided a non-limiting example in which the call management function 160 is implemented as a dedicated apparatus for the task. However, the call management function 160 may also be executed by an entity also configured to perform other tasks. Such an entity may be an apparatus, or entity, in the core network that is e.g., configured to be involved in managing the call connection in the core network. Such an entity may e.g., be the MME/AMF and if the call management function 160 is integrated therein, the delivery of the described signals may be an internal operation of the respective entity.

As derivable from above, some aspects of the present invention may relate to a computer program which, when executed by at least one processor, cause an apparatus to perform at least some portions of the method as described. For example, the computer program may comprise at least one computer-readable non-transitory medium having the computer program code 625 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 625 may comprise a proprietary application, such as computer program code for generating the data record in the manner as described.

The computer program code 625 may also be considered to include the definitions and instructions of an execution of the application of the data record in a further use.

The present invention with the call management function together with the information stored and inquired from the data storage provides flexible and near real-time management of calls and their routing on a destination address basis per telecom operator. In other words, the solution through the stored data offer a common mechanism for all operators to submit their requirements for managing calls, especially directed to special destination addresses and, as a result, there is no need to conduct various offline negotiations between operators anymore.

The specific examples provided in the description given above should not be construed as limiting the applicability and/or the interpretation of the appended claims. Lists and groups of examples provided in the description given above are not exhaustive unless otherwise explicitly stated.

## Claims

1. A method for managing a call originating from a roaming terminal device (150), the call is implemented with IP Multimedia Subsystem based communication protocol, the method, performed by a call management function (160), comprises:
obtaining (310) a destination address of the call,
generating (320) an inquiry to data storage arranged to store a number of destination addresses that are to be handled in accordance with a special procedure, the inquiry carrying data descriptive of the destination address of the call,
receiving (330) a response to the inquiry,
generating (340), in response to that data in the response indicates that the destination address of the call belongs to the number of destination addresses that are to be handled in accordance with the special procedure, a control signal to a core network of a visited communication network (VPLMN) the terminal device is roaming, the control signal carrying data causing an instruction to the core network of the visited communication network (VPLMN) to route the call by the visited communication network (VPLMN) serving the roaming terminal device (150) to the destination address.

2. The method according to claim 1, wherein the destination address is a phone number of a recipient of the call.

3. The method according to any of the preceding claims, the method further comprises:
determining, from the data in the response, the special procedure to be applied with respect to the call.

4. The method according to any of the preceding claims, wherein the special procedure is a routing of the call to the destination address with a Local BreakOut in the visited network the terminal device (150) is roaming.

5. A call management function (160) for managing a call originating from a roaming terminal device (150), the call is implemented with IP Multimedia Subsystem based communication protocol, the call management function (160) is configured to:
obtain (310) a destination address of the call,
generate (320) an inquiry to data storage arranged to store a number of destination addresses that are to be handled in accordance with a special procedure, the inquiry carrying data descriptive of the destination address of the call,
receive (330) a response to the inquiry,
generate (340), in response to that data in the response indicates that the destination address of the call belongs to the number of destination addresses that are to be handled in accordance with the special procedure, a control signal to a core network of a visited communication network (VPLMN) the terminal device is roaming, the control signal carrying data causing an instruction to the core network of the visited communication network (VPLMN) to route the call by the visited communication network (VPLMN) serving the roaming terminal device (150) to the destination address.

6. The call management function (160) according to claim 5, wherein the call management function (160) is configured to apply a phone number of a recipient of the call as the destination address.

7. The call management function (160) according to claim 5 or claim 6, the call management function (160) further configured to:
determine, from the data in the response, the special procedure to be applied with respect to the call.

8. The call management function (160) according to any of the preceding claims 5 to 7, wherein the call management function (160) is configured to apply, as the special procedure, a Local BreakOut in the visited network the terminal device (150) is roaming in routing the call to the destination address.

9. A communication system comprising:
a terminal device (150),
a home communication network (HPLMN) of a subscription of the terminal device (150),
a visited communication network (VPLMN) serving the terminal device (150) as a roaming subscriber,
a call management function (160) for managing a call originating from the terminal device (150), the call is implemented with IP Multimedia Subsystem based communication protocol, the call management function (160) is configured to:
obtain (310) a destination address of the call,
generate (320) an inquiry to data storage arranged to store a number of destination addresses that are to be handled in accordance with a special procedure, the inquiry carrying data descriptive of the destination address of the call,
receive (330) a response to the inquiry,
generate (340), in response to that data in the response indicates that the destination address of the call belongs to the number of destination addresses that are to be handled in accordance with the special procedure, a control signal to a core network of a visited communication network (VPLMN) the terminal device is roaming, the control signal carrying data causing an instruction to the core network of the visited communication network (VPLMN) to route the call by the visited communication network (VPLMN) serving the roaming terminal device (150) to the destination address.

10. The communication system according to claim 9, the communication system further comprises:
IP exchange (IPX) at least for implementing signaling between the home communication network (HPLMN) and the visited communication network (VPLMN).

11. The communication system according to claim 9 or claim 10, wherein the call management function (160) is implemented in at least one of the following: a core network of the home communication network (HPLMN), a core network of the visited communication network (VPLMN), the IP exchange (IPX).

12. A computer program comprising instructions to cause an apparatus configured to implement the call management function (160) according to claim 5 to execute the steps of the method of claim 1.
